# EUROPEAN PATENT APPLICATION

(11) **EP 4 815 050 A1**
(43) Date of publication of application: **30.09.2026**
(21) Application number: 24894264.1
(22) Date of filing: 04.04.2024
(51) Int. Cl.: H01M 4/36, H01M 4/62, H01M 10/0562, H01M 10/052, H01M 4/02

(54) **POSITIVE ELECTRODE FOR ALL-SOLID-STATE BATTERY AND ALL-SOLID-STATE BATTERY INCLUDING SAME**

(30) Priority: 21.11.2023 KR 20230162447
(71) Applicant: SAMSUNG SDI CO., LTD., Yongin-si, Gyeonggi-do 17084 (KR)
(72) Inventor: KIM, Guesung, Yongin-si, Gyeonggi-do 17084 (KR)
(74) Representative: Michalski Hüttermann & Partner mbB
(86) International application number: PCT/KR2024/004424
(87) International publication number: WO 2025/110366

(57) **Abstract**

The present invention relates to a positive electrode for an all-solid-state battery and an all-solid-state battery including same, and the positive electrode for an all-solid-state battery includes a binder matrix and a composite active material embedded in the binder matrix, the composite active material includes a core comprising a positive electrode active material and a conductive material attached on the surface of the positive electrode active material; and an electrolyte layer positioned on the surface of the core.

## Description

### TECHNICAL FIELD

Embodiments relate to a positive electrode for an all-solid-state battery and an all-solid-state battery including the same.

### BACKGROUND ART

Recently, rapid development is being made in electronic devices using batteries, such as mobile phones, laptop computers, and electric vehicles.

As such a battery, a rechargeable lithium-ion battery is mainly used, and currently commercialized rechargeable lithium-ion batteries use graphite, silicon, or a combination thereof as a negative electrode active material. However, increasingly higher energy density is being required, but rechargeable lithium-ion batteries using a negative electrode active material that is graphite, silicon, or a combination thereof cannot satisfy this requirement. Furthermore, safety issues regarding rechargeable lithium-ion batteries are arising.

Accordingly, the development of all-solid-state batteries using lithium metal as the negative electrode is underway. An all-solid-state battery refers to a battery in which all materials are solids, and for example, a battery using a solid electrolyte. Lithium metal has a high average voltage due to a large potential difference with the positive electrode, and may realize a high energy density with a theoretical capacity of approximately 3860 mAh/g. Furthermore, since a solid electrolyte is used, improved safety may be exhibited compared to batteries using a liquid electrolyte.

### DETAILED DESCRIPTION OF THE INVENTION

### TECHNICAL PROBLEM

One embodiment provides a positive electrode for an all-solid-state battery that exhibits excellent electrochemical properties.

Another embodiment provides an all-solid-state battery including the said positive electrode.

### TECHNICAL SOLUTION

One embodiment provides a positive electrode for an all-solid-state battery including a binder matrix; and a composite active material embedded in the binder matrix, wherein the composite active material includes a core including a positive electrode active material and a conductive material attached on the surface of the positive electrode active material; and an electrolyte layer positioned on the surface of the core.

Another embodiment provides an all-solid-state battery including the positive electrode; the negative electrode; and a solid electrolyte layer positioned between the positive electrode and the negative electrode.

### ADVANTAGEOUS EFFECTS

According to one embodiment, a positive electrode for an all-solid-state battery may exhibit excellent electrochemical properties by using a small amount of binder.

### DESCRIPTION OF THE DRAWINGS

FIG. 1 is a schematic diagram illustrating a composite active material for an all-solid-state battery according to one embodiment.
FIG. 2 is a diagram schematically showing a part of a positive electrode for an all-solid-state battery according to one embodiment.
FIG. 3 is a schematic cross-sectional view illustrating an all-solid-state battery according to one embodiment.

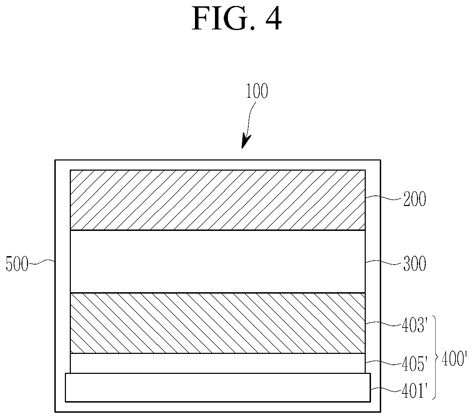

FIG. 4 is a cross-sectional view schematically illustrating an all-solid-state battery according to another embodiment.

### BEST MODE FOR PERFORMING INVENTION

Hereinafter, embodiments of the present invention will be described in detail. However, these embodiments are provided and the disclosure is not limited thereby and the disclosure may be defined by the scope of the claims described later.

Terms used in the specification is used to explain embodiments, but are not intended to be limiting. Expressions in the singular include expressions in plural unless the context clearly dictates otherwise.

The term "combination thereof may include a mixture, a laminate, a complex, a copolymer, an alloy, a blend, a reactant of constituents.

The terms "comprise", "include" or "have" are used to designate that the performed features, numbers, step, components, or a combination thereof is present, but it should be understood that the possibility of presence or addition of one or more other features, numbers, steps, components, or a combination are not to be precluded in advance.

Throughout the specification, unless explicitly described to the contrary, the word "comprise" and variations such as "comprises" or "comprising" will be understood to imply the inclusion of stated elements but not the exclusion of any other element.

The terms "about" and "substantially" used throughout the present specification refer to the meaning of the mentioned with inherent preparation and material permissible errors when presented, and are used in the sense of being close to or near that value, and they are used to help understand the present invention and to prevent unconscientious infringers from unfairly exploiting the disclosure where accurate or absolute values are mentioned.

In the specification, A and/or B and A or B are not exclusive terms, and indicate A, B, or both A and B.

Unless otherwise defined in the specification, it will be understood that when an element, such as a layer, a film, a region, a plate, and the like is referred to as being "on" or "over" another element, it may be directly on, connected to, or coupled to the other element or layer, or one or more intervening elements may be present.

As used herein, "particle size" or "a particle diameter", may be an average particle diameter. The average particle diameter may be defined as an average particle diameter D50 indicating the diameter of particles at the 50 % cumulative volume point of a cumulative size-distribution curve. The particle diameter may be measured by a method well known to those skilled in the art, for example, by a particle size analyzer, or by a transmission electron microscopic image, a scanning electron microscopic image, or a field emission scanning electron microscopy (FE-SEM). In another embodiments, the particle diameter may be determined by measuring with a dynamic light-scattering measurement device and performing a data analysis, and counting the number of particles for each particle size range, and calculating therefrom to obtain an average particle diameter (D50) value, or the particle diameter may be measured by a laser diffraction method. The laser diffraction may be obtained by distributing particles to be measured in a distribution solvent and introducing it to a commercially available laser diffraction particle measuring device (e.g., MT 3000 available from Microtrac, Inc.), irradiating ultrasonic waves of about 28 kHz at a power of 60 W, and calculating an average particle diameter (D50) in the 50 % standard of particle distribution in the measuring device.

The term "thickness" may be measured through a photograph taken with an optical microscope such as a scanning electron microscope.

One embodiment provide a positive electrode for an all-solid-state battery, the positive electrode including a binder matrix and a composite active material embedded in the binder matrix. The positive electrode according to one embodiment includes a positive electrode active material layer consisting of the composite active material, and a positive electrode current collector supporting the positive electrode active material layer.

The composite active material may include: a core including a positive electrode active material and a conductive material attached to a surface of the positive electrode active material; and an electrolyte layer positioned on a surface of the core. The electrolyte layer may be positioned by substantially entirely surrounding the surface of the core, or may be positioned by partially covering the surface of the core.

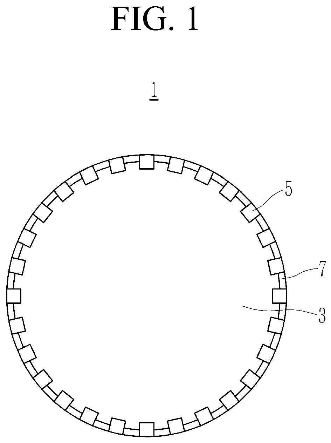

FIG. 1 schematically shows a composite active material 1, which includes a core and an electrolyte layer 7 positioned on the surface of the core. The core includes a positive electrode active material 3 and a conductive material 5 attached to the surface of the positive active material 3. Although FIG. 1 illustrates the conductive material 5 as not being covered by the electrolyte layer 7, the present disclosure is not limited thereto, and the conductive material may be completely covered by the electrolyte layer.

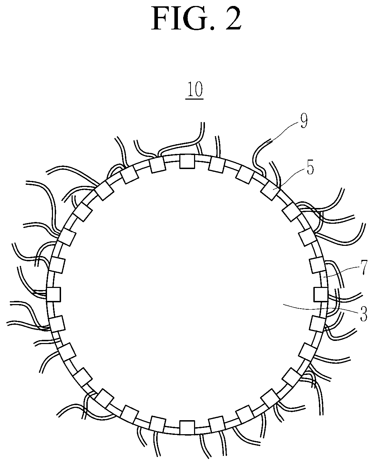

FIG. 2 schematically shows a partial view of the positive electrode 10 including the composite active material shown in Figure 1, wherein the composite active material is embedded in a binder matrix 9.

In one embodiment, the binder matrix may consist of a fibrous binder that does not react with a solid electrolyte, for example, a fibrous binder that does not react with a sulfide-based solid electrolyte. For example, the fibrous binder may be a fibrillated polymer selected from polytetrafluoroethylene, polyvinyl alcohol, polyvinylidene fluoride, or a combination thereof. The fibrous binder may be nanofibers.

Since the fibrous binder possesses adhesiveness, there is no need to prepare a liquid phase by adding the fibrous binder to a solvent.

In one embodiment, the amount of the binder matrix may be 0.1 wt% to 10 wt% based on the total weight of the positive electrode, and may also be 0.1 wt% to 5 wt%, or 0.1 wt% to 2 wt%. If the amount of the binder matrix is included in the above range, lithium ion conduction channels and electron conduction channels may be sufficiently formed.

In one embodiment of the positive electrode, the positive electrode active material is included as a composite active material, and this composite active material may exist in an embedded form within the binder matrix. For example, the composite active material may be attached to a fibrous binder constituting the binder matrix, and thus may exist in an embedded form within the matrix.

The composite active material includes a core and a solid electrolyte layer surrounding the surface of the core, wherein the core may include a positive electrode active material and a conductive material attached to the surface of the positive electrode active material.

The amount of the conductive material may be 0.1 wt% to 10 wt% based on the total weight of the positive electrode, and may also be 0.1 wt% to 5 wt%, or 0.1 wt% to 1 wt%.

The amount of the electrolyte may be 3 wt% to 20 wt% based on the total weight of the positive electrode, and may also be from 3 wt% to 15 wt%, or from 7 wt% to 14 wt% based on the total weight of the positive electrode.

In one embodiment, it is appropriate that the amount of the conductive material is within the aforementioned range and is smaller than the amount of the electrolyte. If the conductive material is within the aforementioned range, for example, if it is included in the positive electrode with an amount less than that of the electrolyte, a reduced amount of the conductive material having a large surface area leads to a reduction in the binder amount, thereby improving electrochemical properties and increasing a density of an active mass.

In one embodiment, the conductive material is included to provide electrode conductivity, and any electrically conductive material may be used as a conductive material unless it causes a chemical change. Examples of conductive materials may include carbon-based materials, metal-based materials, conductive polymers, or combinations thereof. Examples of the conductive material may include a carbon-based material such as carbon black, acetylene black, ketjen black, carbon fiber, carbon nanofiber, graphene, carbon nanotube or the like; a metal-based material of a metal powder or a metal fiber including; copper, nickel, aluminum, silver, or the like; a conductive polymer such as polyphenylene derivatives; or mixtures thereof.

The electrolyte may be a solid electrolyte, and for example, may be an inorganic solid electrolyte such as a sulfide-based solid electrolyte, an oxide-based solid electrolyte, or a halide-based solid electrolyte, or may be a solid polymer electrolyte.

In one embodiment, the sulfide-based solid electrolyte may be Li₂S-P₂S₅, Li₂S-P₂S₅-LiX (where X is an halogen element, for example, I, or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S5-ZₘSₙ (where m and n are each integers of 0 or greater to 12 or less and Z is one of Ge, Zn, or Ga), Li₂S-GeS₂, Li₂S-SiS₂-Li₃PO₄, Li₂S-SiS₂-LiₚMO_{q} (where p and q are each integers of 0 or greater to 12 or less and M is one of P, Si, Ge, B, Al, Ga, and In), LiₐM_{b}P_{c}S_{d}Aₑ (where a, b, c, d, and e are each integers of 0 or greater and 12 or less, M is Ge, Sn, Si, or a combination thereof, and A is one of F, Cl, Br, or I). The sulfide-based solid electrolyte may be, for example, Li₇₋ₓPS₆₋ₓFₓ (0≤x≤2), Li₇₋ₓPS₆₋ₓClₓ (0≤x≤2), Li₇₋ₓPS₆₋ₓBrₓ (0≤x≤2) or Li₇₋ₓPS₆₋ₓIₓ (0≤x≤2). In some embodiments, it may be Li₃PS₄, Li₇P₃S₁₁, Li₇PS₆, Li₆PS₅Cl, Li₆PS₅Cl, Li₆PS₅I, Li₆PS₅Br, Li_{5.8}PS_{4.8}Cl_{1.2}, Li_{6.2}PS_{5.2}Br_{0.8}, or the like.

In one embodiment, the sulfide-based solid electrolyte may be an argyrodite-type sulfide-based solid electrolyte. The argyrodite-type sulfide-based solid electrolyte may be, for example, LiₐM_{b}P_{c}S_{d}Aₑ (where a, b, c, d, and e are each an integer of 0 or more and 12 or less and M is Ge, Sn, Si, or a combination thereof, and A is F, Cl, Br, or I), and in some embodiment, it may be Li₃PS₄, Li₇P₃S₁₁, Li₇PS₆, Li₆PS₅Cl, Li₆PS₅Br, Li₆PS₅I, Li_{5.8}PS_{4.8}Cl_{1.2}, Li_{6.2}PS_{5.2}Br_{0.8}, or the like.

The sulfide-based solid electrolyte may be amorphous, crystalline, or a combination thereof. The sulfide-based solid electrolyte may be prepared, for example, by mixing Li₂S and P₂S₅ at a mole ratio of 50:50 to 90:10, or 50:50 to 80:20. In the range of the mixing ratio, the sulfide-based solid electrolyte exhibiting excellent ionic conductivity may be prepared. by additionally including other components such as SiS₂, GeS₂, B₂S₃, or the like, ionic conductivity may be further improved. As a mixing method, mechanical milling or a solution method may be applied. Mechanical milling is a method in which starting raw materials and a ball mill or the like are placed into a reactor and vigorously agitating to pulverize the starting raw material into fine particles and mix them. The solution method may provide a solid electrolyte as a precipitate by mixing starting raw material in a solvent. Further, firing may be additionally performed after mixing. If the additional firing is carried out, the crystal of the solid electrolyte may become more robust.

The sulfide-based solid electrolyte may be a commercial solid electrolyte.

The oxide-based solid electrolyte may be, for example, Li₁₊ₓTi₂₋ₓAl(PO₄)₃(LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃(PZT), Pb₁₋ₓLaₓZr_{1-y}Ti_{y}O₃(PLZT) (0≤x<1, 0≤y<1), Pb(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanumtitanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, a Garnet-based ceramics Li₃₊ₓLa₃M₂O₁₂ (M is Te, Nb, or Zr, and x is an integer of 1 to 10), or a mixture thereof.

The solid polymer electrolyte may include at least one selected from, for example, polyethylene oxide, poly(diallyldimethylammonium) trifluoromethanesulfonylimide(poly(diallyldimethylammonium)TFSI), Cu₃N, Li₃N, LiPON, Li₃PO₄·Li₂S·SiS₂, Li₂S·GeS₂·Ga₂S₃, Li₂O·11Al₂O₃, Na₂O·11Al₂O₃, (Na,Li)₁₊ₓTi₂₋ₓAlₓ(PO₄)₃ (0.1≤x≤0.9), Li₁₊ₓHf₂₋ₓAlₓ(PO₄)₃ (0.1≤x≤0.9), Na₃Zr₂Si₂PO₁₂, Li₃Zr₂Si₂PO₁₂, Na₅ZrP₃O₁₂, Na₅TiP₃O₁₂, Na₃Fe₂P₃O₁₂, Na₄NbP₃O₁₂, Na-Silicates, Li_{0.3}La_{0.5}TiO₃, Na₅MSi₄O₁₂ (M is a rare-earth element such as Nd, Gd, Dy, or the like) Li₅ZrP₃O₁₂, Li₅TiP₃O₁₂, Li₃Fe₂P₃O₁₂, Li₄NbP₃O₁₂, Li₁₊ₓ(M,Al,Ga)ₓ(Ge_{1-y}Ti_{y})₂₋ₓ(PO₄)₃ (0≤x≤0.8, 0≤y≤1.0, and M is Nd, Sm, Eu, Gd, Tb, Dy, Ho, Er, Tm, or Yb), Li_{1+x+y}QₓTi₂₋ₓSi_{y}P_{3-y}O₁₂ (0<x≤0.4, 0<y≤0.6, and Q is Al or Ga), Li₆BaLa₂Ta₂O₁₂, Li₇La₃Zr₂O₁₂, Li₅La₃Nb₂O₁₂, Li₅La₃M₂O₁₂ (M is Nb, Ta), or Li₇₊ₓAₓLa₃₋ₓZr₂O₁₂ (0<x<3, and A is Zn).

The halide-based solid electrolyte may include a Li element, an M element (where M is a metal except for Li), and an X element (where X is a halogen). The X may be, for example, F, Cl, Br and I. In some embodiment, the halide-based solid electrolyte may include at least one of Br and Cl, as the X. The M may be, for example, a metal element such as Sc, Y, B, Al, Ga, In, and the like.

The composition of the halide-based solid electrolyte is not limited, but the halide-based solid electrolyte may be represented by Li₆₋₃ₐMₐBr_{b}Cl_{c} (where, M is a metal, except for Li, 0<a<2, 0≤b≤6, 0≤c≤6, b+c=6). The a may be 0.75 or more, or 1 or more, and the a may be 1.5 or less. The b may be 1 or more, or 2 or more. The c may be 3 or more, or 4 or more. The exemplary of the halide-based solid electrolyte may be Li₃YBr₆, Li₃YCl₆ or Li₃YBr₂Cl₄.

The solid electrolyte may have a particle shape and may have an average particle diameter D50 of 5.0 µm or less, for example, 0.1 µm to 5.0 µm, 0.5 µm to 5.0 µm, 0.5 µm to 4.0 µm, 0.5 µm to 3.0 µm, 0.5 µm to 2.0 µm, or 0.5 µm to 1.0 µm.

In some embodiments, the positive electrode active material may be a positive electrode active material being capable of reversibly intercalating and deintercalating lithium ions. For example, the positive electrode active material may include one or more composite oxides of a metal selected from cobalt, manganese, nickel, and a combination thereof, and lithium. The examples of the positive electrode active material may be LiₐA_{1-b}B¹_{b}D¹₂ (0.90≤a≤1.8, 0≤b≤0.5); LiₐE_{1-b}B¹_{b}O_{2-c}D¹_{c} (0.90≤a≤1.8, 0≤b≤0.5, 0≤c≤0.5); LiₐE_{2-b}B¹_{b}O_{4-c}D¹_{c} (0.90≤a≤1.8, 0≤b≤0.5, 0≤c≤05); LiₐNi_{1-b-c}Co_{b}B¹_{c}D¹_{α} (0.90≤a≤1.8, 0≤b≤0.5, 0≤c≤0.5, 0<α≤2); LiₐNi_{1-b-c}Co_{b}B¹_{c}O_{2-α}F¹_{α} (0.90≤a≤1.8, 0≤b≤0.5, 0≤c≤0.5, 0<α<2); LiₐNi_{1-b-c}Co_{b}B¹_{c}O_{2-α}F¹₂ (0.90≤a≤1.8, 0≤b≤0.5, 0≤c≤0.5, 0<α<2); LiₐNi_{1-b-c}Mn_{b}B¹_{c}D¹_{α} (0.90≤a≤1.8, 0≤b≤0.5, 0≤c≤0.5, 0<α≤2); LiₐNi_{1-b-c}Mn_{b}B¹_{c}O_{2-α}F¹_{α} (0.90≤a≤1.8, 0≤b≤0.5, 0≤c≤0.5, 0<α<2); LiₐNi_{1-b-c}Mn_{b}B¹_{c}O_{2-α}F¹₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂; QS₂; LiQS₂; V₂O₅; LiV₂O₅; LiI¹O₂; LiNiVO₄; Li_{(3-f)}J₂(PO₄)₃ (0≤f≤2); Li_{(3-f)}Fe₂(PO₄)₃ (0≤f≤2); or LiFePO₄.

In the chemical formulas A is selected from Ni, Co, Mn, or a combination thereof; B¹ is selected from Al, Ni, Co, Mn, Cr, Fe, Mg, Sr, V, a rare earth element, or a combination thereof; D¹ is selected from O, F, S, P, or combination thereof; E is selected from Co, Mn, or combination thereof; F¹ is selected from F, S, P, or a combination thereof; G is selected from Al, Cr, Mn, Fe, Mg, La, Ce, Sr, V, or a combination thereof; Q is selected from Ti, Mo, Mn, or a combination thereof; I¹ is selected from Cr, V, Fe, Sc, Y, or a combination thereof; J is selected from V, Cr, Mn, Co, Ni, Cu, or a combination thereof; L¹ is selected from Mn, Al, or a combination thereof.

According to some embodiments, the positive electrode active material may be a ternary lithium transition metal oxide such as LiNiₓCo_{y}Al_{z}O₂ (NCA), LiNiₓCo_{y}Mn_{z}O₂ (NCM) (wherein, 0<x<1, 0<y<1, 0<z<1, x+y+z=1), or the like.

The compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or mixtures thereof. The coating layer may be formed by any coating method that does not adversely affect the properties of the positive electrode active material, for example, spray coating, dip coating, or the like, and a detailed description thereof is not illustrated since such methods will be readily understood by those of ordinary skill in the art.

The coating layer may be any coating materials which are known as a coating layer for the cathode active material of the all-solid-state battery, and examples may be Li₂O-ZrO₂ (LZO), or the like.

If the positive electrode active material is ternary material including nickel, cobalt, and manganese, or nickel, cobalt, and aluminum, the capacity density of the all-solid-state battery may be further improved, and metal dissolution from the positivie electrode active material in a charged state may be further reduced. This may allow to further improve long-term reliability and cycle characteristics of the all-solid-state battery in a charged state.

Herein, the positive electrode active material may have, a shape, for example, particle shapes such as spherical, ellipsoidal, and the like. In some embodiments, the average particle diameter of the positive electrode active material is not particularly limited, and may be a range applicable to the positive electrode active material of conventional all-solid-state secondary batteries.

In some embodiments, an amount of the positive electrode active material may be, based on the total 100 wt% of the positive electrode, 75 wt% to 94 wt% or 87 wt% to 92 wt%.

According to one embodiment, a positive electrode for an all-solid-state battery may be a sheet-type positive electrode. The sheet-type cathode refers to a positive electrode in which a positive electrode active material layer is formed in a sheet shape.

The positive electrode current collector supporting the positive electrode active material layer may comprise, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may have a foil shape or a sheet shape.

In some embodiments, the thickness of the positive electrode active material layer may be 70 µm to 500 µm, or 150 µm to 300 µm. If the thickness of the positive electrode active material layer is included in the range, the electrode is flexible, and thus the occurrence of cracks and the occurrence of a short circuit due to impact are further suppressed, thereby exhibiting further improved safety.

Hereinafter, the preparation of the positive electrode for an all-solid-state battery will be illustrated. In the preparation, a mixing ratio is described based on the weight ratio in the final positive electrode. For example, the amount ratio of each component in 100 wt% of the positive electrode is described.

A positive electrode active material and a first conductive material are mixed to prepare a mixture.

The mixing ratio of the positive electrode active material and the first conductive material may be in a range of 85: 0.5 by weight ratio to 94: 5 by weight ratio, or may be in a range of 85:0.1 by weight ratio to 94:0.2 by weight ratio. If the mixing ratio of the positive electrode active material and the conductive material is included in the aforementioned range, the conductive material may more appropriately cover the active material to well maintain the conductive path.

The mixing process of the positive electrode active material and the first conductive material may be carried out at a stirring speed of 1000 rpm to 5000 rpm, or 1000 rpm to 3000 rpm. The mixing process may be performed for 1 minute to 10 minutes, or 3 minutes to 7 minutes.

If the mixing process is carried out at the stirring speed for the time, the conductive material may be well mixed with the positive electrode active material without a chopping phenomenon in which the conductive material is cut, thereby allowing the conductive path of the conductive material to be well maintained, and thus an effect of improved high-rate characteristics may be obtained.

The mixture and a first solid electrolyte are mixed to prepare an electrolyte mixture.

The used amount of the first solid electrolyte may be, based on the total 100 wt% of the electrolyte mixture, 0.1 wt% to 2 wt%, or 0.5 wt% to 1 wt%. If the amount of the solid electrolyte used is included within the range, the electrolyte may be uniformly distributed, and the density may be increased.

The mixing process of the mixture and the first solid electrolyte may be performed at a mixing speed of 1000 rpm to 10000 rpm, or 1000 rpm to 3000 rpm. The mixing process may be performed for 1 minute to 10 minutes, or for 1 minute to 7 minutes.

The resulting electrolyte mixture, a second conductive material, a second solid electrolyte, and a binder are mixed to prepare a binder mixture. The mixing process may be carried out at a mixing speed of 1000 rpm to 10000 rpm, 1000 rpm to 3000 rpm, or 1000 rpm to 2200 rpm. The mixing process may be performed 1 time to 15 times, or 1 time to 10 times, wherein each mixing process is carried out for 1 minute to 10 minutes, or 1 minute to 7 minutes.

The first conductive material and the second conductive material are as described above, and may be the same as or different from each other. Furthermore, the first solid electrolyte and the second solid electrolyte are as described above, and may be the same as or different from each other.

The amount of the binder used may be, based on the total 100 wt% of the binder mixture, 0.1 wt% to 5 wt%, or 0.1 wt% to 1 wt%. If the amount of the binder used is included in the above range, a coating layer may be prepared with a small amount of the binder.
the binder mixture is extruded to prepare a positive electrode active material layer.

The extrusion process may be performed using an extruder at a temperature of 50 °C to 100 °C, at a screw rotation speed of 50 rpm to 200 rpm, and at a torque setting of 1 to 5 during extrusion. The torque setting may be controlled by the amount of the binder mixture fed into the extruder; for example, the binder mixture may be fed at a rate of 500 g/hour to 2000 g/hour. For example, the torque setting of 1 to 2 may correspond to a feed rate of 500 g/hour to 900 g/hour, the torque setting of 3 to 4 may correspond to a feed rate of more than 900 g/hour and 1200 g/hour or less, and the torque setting of 5 may correspond to a feed rate of more than 1200 g/hour and 1400 g/ hour less.

If the extrusion process is performed under the aforementioned conditions, a desired positive electrode active material layer, particularly, a sheet-type positive electrode active material layer, may be suitably prepared.

After carrying out the extrusion process, a deagglomeration for the extruded product may be further carried out. The deagglomeration process may be carried out at a rotation speed of 5000 rpm to 20000 rpm or 7000 rpm to 15000 rpm for 1 minute to 10 minutes or 1 minute to 5 minutes.

Furthermore, a pressing process may be further performed on the product obtained from the extrusion or the deagglomeration. The pressing process may be performed as a roll-pressing process. This process may be performed at 20 °C to 100 °C, or at 30 °C to 80 °C. Furthermore, the rotation speed of the roll may be 1 rpm to 10 rpm, or 2 rpm to 5 rpm.

A current collector is positioned on the prepared positive electrode active material layer to prepare a positive electrode. The process of positioning the current collector may be performed before battery fabrication, where the current collector may be positioned on the positive electrode active material layer, and during the battery fabrication, after positioning the positive electrode active material layer in contact with a solid electrolyte layer, the current collector may also be positioned on the other side of the positive electrode active material layer that is not in contact with the solid electrolyte layer.

Another embodiment provides an all-solid-state battery including the positive electrode. The all-solid-state battery includes a negative electrode and a solid electrolyte layer located between the positive electrode and the negative electrode.

The negative electrode includes a current collector and a negative electrode layer located on one surface of the current collector.

The negative electrode layer may be a negative electrode active material layer or a negative electrode coating layer. Alternatively, the negative electrode layer may be a lithium metal layer.

The negative electrode active material layer includes a negative electrode active material, and may include a binder, a conductive material, and/or a solid electrolyte.

The negative electrode active material may include a material capable of reversibly intercalating/deintercalating lithium ions, lithium metal, an alloy of lithium metal, a material capable of being doped and dedoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite such as unspecified-shaped, plate-shaped, flake-shaped, spherical, or fibrous natural graphite or artificial graphite, and examples of the amorphous carbon may include soft carbon or hard carbon, mesophase pitch carbide, calcined coke, and the like.

As the alloy for the lithium metal, an alloy of lithium with one or more metals selected from the group consisting of Na, K, Rb, Cs, Fr, Be, Mg, Ca, Sr, Si, Sb, Pb, In, Zn, Ba, Ra, Ge, Al, and Sn may be used.

The material capable of doping/dedoping lithium may be a Si-based negative electrode active material, or a Sn-based negative electrode active material, the Si-based negative electrode active material may be silicon, a silicon-carbon composite, SiOₓ (0<x<2), a Si-Q alloy (wherein Q is an element selected from an alkali metal, an alkaline-earth metal, a Group 13 element, a Group 14 element, except for Si, a Group 15 element, a Group 16 element, a transition metal, a rare earth element, and a combination thereof), or a combination thereof, the Sn-based negative electrode active material may be Sn, SnO₂, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof, but not Sn), and the like, and additionally, at least one of these mixed with SiO₂ may also be used. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combinations thereof.

The silicon-carbon composite may be, for example, a silicon-carbon composite including a core including crystalline carbon and silicon particles, and an amorphous carbon coating layer located on the surface of the core. The crystalline carbon may be artificial graphite, natural graphite, or a combination thereof. As the amorphous carbon precursor, coal-based pitch, mesophase pitch, petroleum-based pitch, coal-based oil, petroleum-based heavy oil, or polymer resins such as phenol resin, furan resin, or polyimide resin may be used. Herein, the amount of silicon may be 10 wt% to 50 wt% based on the total weight of the silicon-carbon composite. Furthermore, the amount of the crystalline carbon may be 10 wt% to 70 wt% based on the total weight of the silicon-carbon composite, and the amount of the amorphous carbon may be 20 wt% to 40 wt% based on the total weight of the silicon-carbon composite. In addition, the thickness of the amorphous carbon coating layer may be 5 nm to 100 nm.

The silicon particle may have an average particle diameter of 10 nm to 20 µm, for example, 10 nm to 500 nm. The silicon particles may be presented in an oxidized form, and herein, an atomic weight ratio of Si:O within the silicon particles, which indicates a degree of oxidation, may be 99:1 to 33:67. The silicon particles may be SiOₓ particles, and herein, the range of x in SiOₓ may be greater than 0 and less than 2. As used herein, an average particle diameter D₅₀ indicates a diameter of particle where the cumulative volume corresponds to 50 volume% in the particle size distribution, as measured by a particle size analyzer using a laser diffraction method.

The Si-based negative electrode active material or the Sn-based negative electrode active material may be used together with a carbon-based negative electrode active material. The mixing ratio of the Si-based negative active material or the Sn-based anode active material, and the carbon-based negative electrode active material may be 1:99 to 90:10 by weight ratio.

In the negative electrode active material layer, an amount of the negative electrode active material may be 95 wt% to 99 wt% based on the total weight of the negative electrode active material layer.

In one embodiment, the negative electrode active material layer may further include a binder, and may optionally further include a conductive material. In the negative electrode active material layer, an amount of the binder may be 1 wt% to 5 wt% based on the total weight of the negative electrode active material layer. In addition, if a conductive material is further included, the negative electrode active material layer may include 90 wt% to 98 wt% of the negative electrode active material, 1 wt% to 5 wt% of the binder, and 1 wt% to 5 wt% of the conductive material.

The binder serves to well attach the negative electrode active material particles to each other and also to well attach the negative electrode active material to the current collector. The binder may be a non-aqueous binder, an aqueous binder, or a combination thereof.

The non-aqueous binder may include, for example, polyvinyl chloride, carboxylated polyvinyl chloride, polyvinyl fluoride, a polymer including ethylene oxide, an ethylene propylene copolymer, polystyrene, polyvinyl pyrrolidone, polyurethane, polytetrafluoroethylene, polyvinylidene fluoride, polyethylene, polypropylene, polyamideimide, polyimide, or a combination thereof.

The aqueous binder may include a rubber-based binder or a polymer resin binder. The rubber-based binder may be selected from styrene-butadiene rubber, acrylated styrene-butadiene rubber, acrylonitrile-butadiene rubber, acrylic rubber, butyl rubber, fluoro rubber, or combinations thereof. The polymer resin binder may be selected from polyethylene oxide, polyvinylpyrrolidone, polyepichlorohydrin, polyphosphazene, polyacrylonitrile, ethylene-propylene diene copolymer, polyvinylpyridine, chlorosulfonated polyethylene, latex, polyester resin, acrylic resin, phenol resin, epoxy resin, polyvinyl alcohol, and combinations thereof.

If an aqueous binder is used as the negative electrode binder, a thickener capable of imparting viscosity may be further used together and the thickener may include, for example, a cellulose compound. The cellulose compound may include carboxymethyl cellulose, hydroxypropylmethyl cellulose, methyl cellulose, or alkali metal salts thereof, or a combination thereof. The alkali metal may be Na, K, or Li. An amount of the thickener used may be 0.1 parts by weight to 3 parts by weight based on 100 parts by weight of the negative electrode active material. The cellulose compound may also serve as a binder.

The binder is not limited to these, and any material that may be used as a binder in the art may be utilized, and the amount thereof may also be appropriately adjusted.

The conductive material is used to impart conductivity to the electrode, and examples of the conductive material may be a carbon-based material such as natural graphite, artificial graphite, carbon black, acetylene black, ketjen black, a carbon fiber, carbon nanotubes, and the like; a metal-based material of a metal powder or a metal fiber including copper, nickel, aluminum, silver, and the like; a conductive polymer such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal, and a combination thereof.

If the negative electrode layer is the negative electrode coating layer, the negative electrode refers to a deposition-type negative electrode. The deposition-type negative electrode represents a negative electrode that does not include a negative electrode active material during the battery preparation, but lithium metal, or the like is deposited during charge of the battery the lithium deposition layer acts as a negative electrode active material battery, and the deposited lithium metal acts as a negative electrode active material. To explain this in more detail, the electrode coating layer refers to a layer, that helps the movement of lithium ions released from the positive electrode active material to the negative electrode during charging and discharging of the all-solid-state battery, thereby facilitating their deposition on the surface of the current collector. For example, a lithium deposition layer, due to the deposition of lithium ions between the current collector and the negative electrode coating layer may be formed, and the lithium deposition layer acts as a negative electrode active material, and this negative electrode is generally referred to as a deposition-type negative electrode. The amorphous carbon and the metal included in the negative electrode coating layer do not act as a negative electrode active material which directly participates in the charge and discharge reaction.

The negative electrode coating layer may include a metal acting as a catalyst, a carbon-based material, or a combination thereof. In the negative electrode coating layer, for example, the metal may be supported on the carbon-based material, or the metal and the carbon-based material may be present in a mixed state. In one embodiment, the negative electrode coating layer may include a metal and a carbon-based material.

The carbon-based material, may be, for example, crystalline carbon, amorphous carbon, or a combination thereof, or may be amorphous carbon. The crystalline carbon may be, for example, natural graphite, artificial graphite, mesophase carbon microbead, carbon nanotube, graphene, or a combination thereof. The amorphous carbon may be, for example, carbon black, acetylene black, denka black, ketjen black, furnace black, activated carbon, graphene, or combinations thereof. The carbon black may be Super P (available from Timcal, Ltd.). The amorphous carbon is not limited thereto, and any material which may be classified as amorphous carbon in the field may be available.

The carbon-based material, may be, for example, crystalline carbon, amorphous carbon, or a mixture thereof. The amorphous carbon may be, for example, carbon black, acetylene black, denka black, ketjen black, furnace black, activated carbon, or combinations thereof. The carbon black may be Super P (available from Timcal, Ltd.). The crystalline carbon may be, for example, natural graphite, artificial graphite, carbon nanotube, graphene, or a combination thereof. The crystalline carbon may have unspecified shape, sheet shape, flake shape, spherical shape, or fiber shape.

In one embodiment, the carbon-based material may be single particles or an agglomerated product that has a secondary particle form where primary particles are agglomerated. If the carbon-based material is single particles, the size of the carbon-based material may have an average particle diameter of 100 nm or less, for example, a nanosize of 10 nm to 100 nm.

If the carbon-based material is an agglomerated product, the particle diameter of the primary particle may be 20 nm to 100 nm and the particle diameter of the secondary particle may be 1 µm to 20 µm.

In one embodiment, a particle diameter of the primary particles may be 20 nm or more, 30 nm or more, 40 nm or more, 50 nm or more, 60 nm or more, 70 nm or more, 80 nm or more, or 90 nm or more, and 100 nm or less, 90 nm or less, 80 nm or less, 70 nm or less, 60 nm or less, 50 nm or less, 40 nm or less, or 30 nm or less.

In one embodiment, a particle diameter of the secondary particle may be 1 µm or more, 3 µm or more, 5 µm or more, 7 µm or more, 10 µm or more, or 15 µm or more, and 20 µm or less, 15 µm or less, 10 µm or less, 7 µm or less, 5 µm or less, or 3 µm or less.

The shape of the primary particle may be spherical, oval, plate-shaped, or combinations thereof, and in some embodiments, the shape of the primary particle may be spherical, oval, or combinations thereof.

The metal may be Ag, Au, Sn, Zn, Al, Mg, Ge, Cu, In, Ni, Bi, Pt, Pd, or a combination thereof. The inclusion of the metal in the negative electrode coating layer may further improve the electrical conductivity of the negative electrode.

The metal may be nano particles and the size of the metal nano particles, for example, an average size of the metal nano particles may be 5 nm to 80 nm, however, if it is a nanometer size, it may be appropriately used. If the metal nanoparticles with nano size are used, the battery characteristics, for example, cycle-life characteristics of the all solid-state battery, may be improved. If the metal particle size increases to the micrometers scale, the uniformity of the metal particles in the negative electrode coating layer may decrease, which may lead to an increase in current density in a specific area, and a deterioration of cycle life characteristics, thus being undesirable.

Furthermore, an amount of the metal may be, based on the total 100 wt% of the negative electrode coating layer, 3 wt% to 30 wt%, 4 wt% to 25 wt%, 5 wt% to 20 wt%, or 5 wt% to 15 wt%.

In addition, the carbon-based material may be, based on the total 100 wt% of the negative electrode coating layer, 70 wt% to 97 wt%, 75 wt% to 96 wt%, 80 wt% to 95 wt%, or 85 wt% to 95 wt%.

The negative electrode coating layer may further include a binder. The binder may be a non-aqueous binder.

The non-aqueous binder may be, for example, polyvinylchloride, carboxylated polyvinylchloride, polyvinyl fluoride, a polymer including ethylene oxide, an ethylene propylene copolymer, polystyrene, polyvinyl pyrrolidone, polyurethane, polytetrafluoroethylene, polyvinylidene fluoride, polyethylene, polypropylene, polyamideimide, polyimide, polyacrylate, or a combination thereof.

The binder may be, based on the total 100 wt% of the negative electrode coating layer, 1 to 15 wt%, for example, the binder may be, based on the total 100 wt% of the negative electrode coating layer, 1 wt% or more, 2 wt% or more, 3 wt% or more, 4 wt% or more, 5 wt% or more, 6 wt% or more, 7 wt% or more, 8 wt% or more, 9 wt% or more, 10 wt% or more, 11 wt% or more, 12 wt% or more, 13 wt% or more, or 14 wt% or more, and 15 wt% or less, 14 wt% or less, 13 wt% or less, 12 wt% or less, 11 wt% or less, 10 wt% or less, 9 wt% or less, 8 wt% or less, 7 wt% or less, 6 wt% or less, 5 wt% or less, 4 wt% or less, 3 wt% or less, or 2 wt% or less.

If the binder is included in the negative electrode coating layer of the all-solid-state battery at the weight range, the electrical resistance and the adherence may be improved, thereby enhancing the battery characteristics, for example, battery capacity and output characteristics of the all-solid-state battery.

The negative electrode coating layer may further comprise additives such as, for example, a filler, a dispersant, and the like. In addition, the filler, the dispersing agent or the like. which may be included in the negative electrode coating layer, may be materials known in the related art which are generally used in the all-solid-state battery.

The negative electrode coating layer may have a thickness of 1 µm to 20 µm. For example, the thickness of the negative electrode coating layer may be 1 µm or more, 3 µm or more, 5 µm or more, 20 µm or less, 18 µm or less, 16 µm or less, 14 µm or less, 12 µm or less, 10 µm or less.

The current collector may be, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may have a foil shape or a sheet shape. A thickness of the negative electrode current collector may be 1 µm to 20 µm, 5 µm to 15 µm, or 7 µm to 10 µm.

The current collector may include the metal as a substrate and may further include a thin film on the substrate. The thin film may include an element being capable of forming an alloy with lithium, for example, gold, silver, zinc, tin, indium, silicon, aluminum, bismuth, or a combination thereof, but is not limited thereto and any elements known in the art as long as forming an alloy with lithium may be utilized. If the current collector further includes a thin film, the more flattened lithium-containing layer may be formed, if the lithium is deposited during charging to form the lithium-containing layer, thereby further improving the cycle-life characteristics of the all solid-state battery.

A thickness of the thin film may be 1 nm to 800 nm, 10 nm to 700 nm, 50 nm to 600 nm, or 100 nm to 500 nm. If the thickness of the thin film is within the range, the cycle-life characteristics may be further enhanced.

The negative electrode according to one embodiment may further include, between the current collector and the negative electrode coating layer, a lithium-containing layer that is formed during the initial charge after the battery preparation. The thickness of the lithium-containing layer may be 1 µm to 1000 µm, 1 µm to 500 µm, 1 µm to 200 µm, 1 µm to 150 µm, 1 µm to 100 µm, or 1 µm to 50 µm. If the thickness of the lithium-containing layer falls in the range, it may effectively perform the role of a lithium reservoir and the cycle-life characteristics may be further enhanced.

The lithium-containing layer may be formed after fabricating the battery during charging, as lithium ions are released from a positive electrode active material, pass through the solid electrolyte, and migrate toward the negative electrode, and thus, whereby lithium is precipitated and deposited on the negative electrode current collector.

The charging may be a formation process which may be carried out one to three times at 0.05 C to 1 C at about 25 °C to 50 °C. If lithium is precipitated and deposited to form the lithium-containing layer, lithium included in the lithium-containing layer is ionized during discharging and moves toward the positive electrode, and thus, this lithium may be used as a negative electrode active material.

In one embodiment, as the lithium-containing layer is positioned between the current collector and the negative electrode coating layer, the negative electrode coating layer may serve as a protecting layer for the lithium-containing layer, and thus, the deposition growth of lithium dendrite may be suppressed. This enables to inhibit capacity fading and short-circuit of the all-solid-state battery and resultantly improve the cycle-life of the all-solid-state battery.

The solid electrolyte layer includes a solid electrolyte. The solid electrolyte may be an inorganic solid electrolyte such as a sulfide-based solid electrolyte, an oxide-based solid electrolyte, a halide-based solid electrolyte, and the like, or solid polymer electrolyte. The examples of sulfide-based solid electrolyte, the oxide-based solid electrolyte, the halide-based solid electrolyte, and the solid polymer electrolyte are the same as those described above. Furthermore, this solid electrolyte may be the same as or different from the electrolyte used in the positive electrode.

The solid electrolyte layer may further include a binder. The binder may be a styrene butadiene rubber, polytetrafluoroethylene, polyvinylidene fluoride, polyethylene, an acrylate-based polymer, or a combination thereof, but is not limited thereto, and may be any material which is generally used in the related art. The acrylate-based polymer may be butyl acrylate, polyacrylate, polymethacrylate, or a combination thereof.

The solid electrolyte layer may be prepared by adding a solid electrolyte to a binder solution, coating it on a substrate film, and drying it. The binder solution may include isobutyryl isobutylate, xylene, toluene, benzene, hexane, or a combination thereof, as a solvent. The solid electrolyte layer preparation is widely known in the art, so a detailed description thereof will be omitted in the specification.

In one embodiment, the all-solid-state battery may further include a buffer material which may buffer changes in thickness generated during charging and discharging. The buffer material may be located between the negative electrode and a case, and in the case of a battery in which one or more electrode assemblies are stacked, it may be located between different electrode assemblies.

The buffer material may include a material having an elastic recovery rate of 50 % or more and insulating properties, and in one embodiment, may include silicone rubber, acrylic rubber, fluorinated rubber, nylon, synthetic rubber, or a combination thereof. The buffer material may be present in a form of a polymer sheet.

FIG. 2 is a cross-sectional view showing the all solid-state battery according to one embodiment. Referring to FIG. 2, the all-solid-state battery 100 may have a structure in which an electrode assembly, in which a negative electrode 400 including a negative electrode current collector 401 and a negative electrode layer 403, a solid electrolyte layer 300, and a positive electrode 200 are stacked, is housed in a case such as a pouch, or the like. The all-solid-state battery 100 may further include an elastic layer 500 positioned on the outside of at least one of the positive electrode 200 and the negative electrode 400. FIG. 2 shows one electrode assembly including a negative electrode 400, a solid electrolyte layer 300, and a positive electrode 200, but an all-solid-state battery may also be fabricated by stacking at least two electrode assemblies.

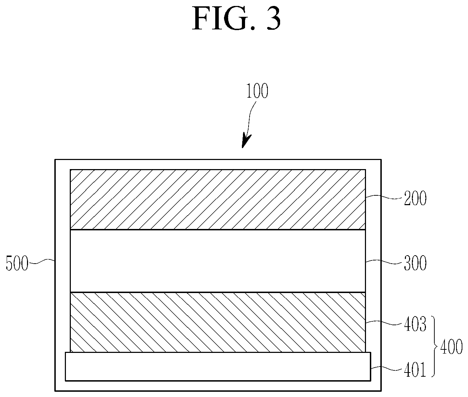

FIG. 3 schematically shows the all-solid-state battery of another embodiment. The all-solid-state battery 100 shown in FIG. 3 includes a positive electrode 200, a negative electrode 400' including a negative electrode current collector 401' and a negative electrode layer 403', a solid electrolyte 300 between the positive electrode 200 and the negative electrode 400, a battery case 500 in which these are housed, and a lithium deposition layer 405' between the negative current collector 401' and the negative coating layer 403'. Such a lithium deposition layer may be formed during charging of the all-solid-state battery, as lithium ions are released from the cathode active material and are deposited on the anode current collector 401'.

The all-solid-state battery according to one embodiment may be fabricated by preparing an assembly including a negative electrode, a positive electrode, and a solid electrolyte layer positioned between the negative electrode and the positive electrode, and pressing the assembly.

The pressing may be carried out at a temperature of 25 °C to 90 °C. Furthermore, the pressing may be carried out under a pressure of 550 MPa or less, for example, 500 MPa or less, for example, a pressure of 1 MPa to 500 MPa. The pressing time may be varied depending on temperature and pressure, for example, it may be less than 60 minutes. The pressing may be carried out using, for example, isostatic press, roll press, plate press, or warm isostatic press (WIP).

### MODE FOR PERFORMING THE INVENTION

Hereinafter, examples of the present invention and comparative examples are described. These examples, however, are not in any sense to be interpreted as limiting the scope of the invention.

In the following Examples and Comparative Examples, the mixing ratio is described as the weight ratio in the final positive electrode.

### (Example 1)

### (1) Preparation of Positive electrode

A LiNi_{0.9}Mn_{0.05}Co_{0.05}O₂ positive electrode active material and a Ketjen black conductive material were mixed at a weight ratio of 85:0.1 weight ratio using a mixer (Nobailta MINI available from Hosokawa Micron), at a stirring speed of 2000 rpm for 2 minutes, to prepare a mixture.

The mixture and an argyrodite-type solid electrolyte Li₆PS₅Cl were mixed at a weight ratio of 85.1:0.05 weight ratio using a mixer (Nobailta MINI), at a stirring speed of 2000 rpm for 5 minutes to prepare an electrolyte mixture.

The electrolyte mixture, a Ketjen black conductive material, an argyrodite-type solid electrolyte Li₆PS₅C, and a polytetrafluoroethylene binder were mixed at a weight ratio of 85.15:0.3:13.1:1.45 using a mixer (THINKY MIXER), at a 2000 rpm for 1 minute, repeated 10 times, to prepare a binder mixture.

The extruded product was prepared by performing extrusion of the binder mixture using an extruder at 60 °C, with a screw rotation speed of 100 rpm and a torque condition of 2 during extrusion (wherein the binder mixture was fed at 500 g/hour).

The extruded product was pulverized for 2 minutes at a rotation speed of 10000 rpm.

Subsequently, the obtained product was subjected to a roll-press using two rolls at 60 °C with a roll rotation speed of 3 rpm, thereby preparing a sheet-type positive electrode active material layer. The thickness of the prepared sheet-type positive electrode active material layer was 200 µm. The prepared positive electrode active material layer was in a state where a composite active material including a core, which included the positive electrode active material and the conductive material attached to the surface of the positive electrode active material, and the electrolyte surrounding the surface of the core, was embedded in a binder matrix.

The positive electrode was prepared by positioning the positive electrode active material layer on the aluminum positive electrode current collector.

### (2) Preparation of negative electrode

Ag nanoparticle (D50: 60 nm) and carbon black were mixed at a weight ratio of 10:90 in a water solvent to prepare a negative electrode coating layer slurry. The carbon black was a mixture of single particles having a particle size of 38 nm and secondary particles, wherein the secondary particles were formed by assembling primary particles having a particle size of 76nm, and the secondary particles had a particle size of 275nm.

The slurry was coated on a stainless steel foil current collector and vacuum-dried at 80 °C to prepare a negative electrode including a negative electrode coating layer having a thickness of 12 µm and a current collector having a thickness of 10 µm. The negative electrode coating layer had a thickness of 12 µm.

### (3) Preparation of solid electrolyte layer

An isobutyryl isobutyrate binder solution (solid amount: 50 wt%) including butyl acrylate as an acrylate-based polymer was added to an argyrodite-type solid electrolyte Li₆PS₅Cl and mixed. Herein, a mixing ratio of solid electrolyte to the binder was 98.7:1.3 by weight ratio).

The mixing process was carried out using a Thinky mixer. A 2 mm zirconia ball was added to the resulting mixture, and the mixture was stirred again using a Thinky mixer to prepare a slurry. The slurry was cast onto a release polytetrafluoroethylene film and dried at room temperature, thereby preparing a solid electrolyte having a solid electrolyte layer thickness of 100 µm.

### (4) Fabrication of all-solid-state full cell

The positive electrode, the solid electrolyte, and the negative electrode were sequentially stacked and sealed in a pouch, and then subjected to isostatic pressing at a high temperature of 80 °C and 500 MPa for 30 minutes, thereby fabricating a rechargeable all-solid-state cell (mini-cell).

### (Example 2)

A positive electrode was prepared in the same manner as in Example 1, except that a mixing ratio of the mixture and the argyrodite-type solid electrolyte Li₆PS₅Cl was changed into a weight ratio of 85.1:0.1, and a mixing ratio of the electrolyte mixture, the Ketjen black conductive material, the argyrodite-type solid electrolyte Li₆PS₅C, and the polytetrafluoroethylene binder was changed into a weight ratio of 85.2:0.3:13.1:1.4.

An all-solid-state cell was fabricated in the same manner as in Example 1 using the positive electrode, the negative electrode of Example 1, and the solid electrolyte of Example 1.

### (Example 3)

A positive electrode was prepared in the same manner as in Example 1, except that a mixing ratio of the mixture and the argyrodite-type solid electrolyte Li₆PS₅Cl was changed into a weight ratio of 85.1:0.2, and a mixing ratio of the electrolyte mixture, the Ketjen black conductive material, the argyrodite-type solid electrolyte Li₆PS₅C, and the polytetrafluoroethylene binder was changed into a weight ratio of 85.3:0.3:13.1:1.3.

An all-solid-state cell was fabricated in the same manner as in Example 1 using the positive electrode, the negative electrode of Example 1, and the solid electrolyte of Example 1.

### (Example 4)

A positive electrode was prepared in the same manner as in Example 1, except that a mixing ratio of the mixture and the argyrodite-type solid electrolyte Li₆PS₅Cl was changed into a weight ratio of 85.1:0.4, and a mixing ratio of the electrolyte mixture, the Ketjen black conductive material, the argyrodite-type solid electrolyte Li₆PS₅C, and the polytetrafluoroethylene binder was changed into a weight ratio of 85.5:0.3:13.1:1.3.

An all-solid-state cell was fabricated in the same manner as in Example 1 using the positive electrode, the negative electrode of Example 1, and the solid electrolyte of Example 1.

### (Example 5)

A positive electrode was prepared in the same manner as in Example 1, except that a mixing ratio of the LiNi_{0.9}Mn_{0.05}Co_{0.05}O₂ positive electrode active material and the Ketjen black conductive material was changed into a weight ratio of 85.2:0.1, a mixing ratio of the mixture and the argyrodite-type solid electrolyte Li₆PS₅Cl was changed into a weight ratio of 85.3:0.05, and a mixing ratio of the electrolyte mixture, the Ketjen black conductive material, the argyrodite-type solid electrolyte Li₆PS₅Cl, and the polytetrafluoroethylene binder was changed into a weight ratio of 85.35:0.3:13.55:0.8.

An all-solid-state cell was fabricated in the same manner as in Example 1 using the positive electrode, the negative electrode of Example 1, and the solid electrolyte of Example 1.

### (Example 6)

A positive electrode was prepared in the same manner as in Example 1, except that a mixing ratio of the LiNi_{0.9}Mn_{0.05}Co_{0.05}O₂ positive electrode active material and the Ketjen black conductive material was changed into a weight ratio of 85.4:0.1, a mixing ratio of the mixture and the argyrodite-type solid electrolyte Li₆PS₅Cl was changed into a weight ratio of 85.5:0.05, and a mixing ratio of the electrolyte mixture, the Ketjen black conductive material, the argyrodite-type solid electrolyte Li₆PS₅Cl, and the polytetrafluoroethylene binder was changed into a weight ratio of 85.55:0.3:13.55:0.6.

An all-solid-state cell was fabricated in the same manner as in Example 1 using the positive electrode, the negative electrode of Example 1, and the solid electrolyte of Example 1.

### (Example 7)

A positive electrode was prepared in the same manner as in Example 1, except that a mixing ratio of the LiNi_{0.9}Mn_{0.05}Co_{0.05}O₂ positive electrode active material and the Ketjen black conductive material was changed into a weight ratio of 85.6:0.1, a mixing ratio of the mixture and the argyrodite-type solid electrolyte Li₆PS₅Cl was changed into a weight ratio of 85.7:0.05, and a mixing ratio of the electrolyte mixture, the Ketjen black conductive material, the argyrodite-type solid electrolyte Li₆PS₅Cl, and the polytetrafluoroethylene binder was changed into a weight ratio of 86.75:0.3:13.55:0.4.

An all-solid-state cell was fabricated in the same manner as in Example 1 using the positive electrode, the negative electrode of Example 1, and the solid electrolyte of Example 1.

### (Comparative Example 1)

### (1) Preparation of Positive electrode

A LiNi_{0.9}Mn_{0.05}Co_{0.05}O₂ positive electrode active material and a Ketjen black conductive material were mixed at a weight ratio of 85:0.4 weight ratio using a mixer (Nobailta MINI available from Hosokawa Micron), at a stirring speed of 2000 rpm for 7 minutes, to prepare a mixture.

The mixture, the argyrodite-type solid electrolyte Li₆PS₅Cl, and a polytetrafluoroethylene binder were mixed at a weight ratio of 85.4:13.6:1 using a mixer (THINKY MIXER), at a stirring 10 times for 1 minute each at a speed of 2000 rpm to prepare a binder mixture.

The extruded product was prepared by performing extrusion of the binder mixture using an extruder at 60 °C, with a screw rotation speed of 100 rpm and a torque condition of 2 during extrusion (wherein the binder mixture was fed at 500 g/hour).

The extruded product was pulverized for 2 minutes at a rotation speed of 10000 rpm.

Subsequently, the obtained product was subjected to a roll-press using two rolls at 60 °C with a roll rotation speed of 3 rpm, thereby preparing a sheet-type positive electrode active material layer. The thickness of the prepared sheet-type positive electrode active material layer was 200 µm. The prepared positive electrode active material layer was in a state where a composite active material including a positive electrode active material and the conductive material attached to the surface of the positive electrode active material, was embedded in a binder matrix.

The positive electrode was prepared by positioning the positive electrode active material layer on the aluminum positive electrode current collector.

### (2) Fabrication of all-solid-state full cell

The positive electrode, the solid electrolyte of Example 1, and the negative electrode of Example 1 were sequentially stacked and sealed in a pouch, and then subjected to isostatic pressing at a high temperature of 80 °C and 500 MPa for 30 minutes, thereby fabricating a rechargeable all-solid-state cell (mini-cell).

### (Comparative Example 2)

### (1) Preparation of Positive electrode

A LiNi_{0.9}Mn_{0.05}Co_{0.05}O₂ positive electrode active material and the argyrodite-type solid electrolyte Li₆PS₅Cl, and the conductive material were mixed at a weight ratio of 85:13.6 using a mixer (Nobailta MINI available from Hosokawa Micron), at a stirring speed of 2000 rpm for 7 minutes.

The solid electrolyte mixture, a Ketjen black conductive material, and a polytetrafluoroethylene binder were mixed at a weight ratio of 98.6:0.4:1 using a mixer (THINKY MIXER), at 2000 rpm for 1 minute, repeated 10 times, to prepare a binder mixture.

The extruded product was prepared by performing extrusion of the resulting mixture using an extruder at 60 °C, with a screw rotation speed of 100 rpm and a torque condition of 2 during extrusion.

The extruded product was pulverized for 2 minutes at a rotation speed of 10000 rpm.

Subsequently, the obtained product was subjected to a roll-press using two rolls at 60 °C with a roll rotation speed of 3 rpm, thereby preparing a sheet-type positive electrode active material layer. The thickness of the prepared sheet-type positive electrode active material layer was 200 µm. The prepared positive electrode active material layer was in a state where a composite active material including a positive electrode active material and the solid electrolyte layer surrounding on the surface of the positive electrode active material, was embedded in a binder matrix.

The positive electrode was prepared by positioning the positive electrode active material layer on the aluminum positive electrode current collector.

### (2) Fabrication of all-solid-state full cell

The positive electrode, the solid electrolyte of Example 1, and the negative electrode of Example 1 were sequentially stacked and sealed in a pouch, and then subjected to isostatic pressing at a high temperature of 80 °C and 500 MPa for 30 minutes, thereby fabricating a rechargeable all-solid-state cell (mini-cell).

### (Comparative Example 3)

### (1) Preparation of Positive electrode

A LiNi_{0.9}Mn_{0.05}Co_{0.05}O₂ positive electrode active material and the argyrodite-type solid electrolyte Li₆PS₅Cl, and the conductive material were mixed at a weight ratio of 85:0.6 using a mixer (Nobailta MINI available from Hosokawa Micron), at a stirring speed of 2000 rpm for 7 minutes, to prepare a mixture.

The solid electrolyte mixture, a Ketjen black conductive material, a argyrodite-type solid electrolyte Li₆PS₅Cl,and a polytetrafluoroethylene binder were added to a xylene solvent at a weight ratio of 85.6:0.4:13:1, and mixed using a mixer (THINKY MIXER), at 2000 rpm for 1 minute, repeated 10 times, to prepare a binder mixture.

The extruded product was prepared by performing extrusion of the binder mixture using an extruder at 60 °C, with a screw rotation speed of 100 rpm and a torque condition of 2 during extrusion.

The extruded product was pulverized for 2 minutes at a rotation speed of 10000 rpm.

Subsequently, the obtained product was subjected to a roll-press using two rolls at 60 °C with a roll rotation speed of 3 rpm, thereby preparing a sheet-type positive electrode active material layer. The thickness of the prepared sheet-type positive electrode active material layer was 130 µm. The prepared positive electrode active material layer was in a state where a composite active material including a core, which included the positive electrode active material and the electrolyte surrounding the surface of the positive electrode active material, and the conductive material located on the surface of the core, was embedded in a binder matrix. The positive electrode was prepared by positioning the positive electrode active material layer on the aluminum positive electrode current collector.

An all-solid-state cell was fabricated in the same manner as in Example 1 using the positive electrode, the negative electrode of Example 1, and the solid electrolyte of Example 1.

### (Comparative Example 4)

### (1) Preparation of Positive electrode

A LiNi_{0.9}Mn_{0.05}Co_{0.05}O₂ positive electrode active material and the argyrodite-type solid electrolyte Li₆PS₅Cl were mixed at a weight ratio of 85:13.6 weight ratio using a mixer (Nobailta MINI available from Hosokawa Micron), at a stirring speed of 2000 rpm for 2 minutes, to prepare an electrolyte mixture.

The electrolyte mixture and a Ketjen black conductive material were mixed at a weight ratio of 98.6:0.4 using a mixer (Nobailta MINI), at a stirring speed of 2000 rpm for 5 minutes to prepare a mixture.

The mixture and a polytetrafluoroethylene binder were mixed at a weight ratio of 99:1, using a mixer (THINKY MIXER), at 2000 rpm for 1 minute, repeated 10 times, to prepare a binder mixture

The extruded product was prepared by performing extrusion of the binder mixture using an extruder at 60 °C, with a screw rotation speed of 100 rpm and a torque condition of 2 during extrusion.

The extruded product was pulverized for 2 minutes at a rotation speed of 10000 rpm.

Subsequently, the obtained product was subjected to a roll-press using two rolls at 60 °C with a roll rotation speed of 3 rpm, thereby preparing a sheet-type positive electrode active material layer. The thickness of the prepared sheet-type positive electrode active material layer was 200 µm. The prepared positive electrode active material layer was in a state where a composite active material including a core, which included the positive electrode active material and the electrolyte surrounding the surface of the positive electrode active material, and the conductive material located on the surface of the core, was embedded in a binder matrix.

The positive electrode was prepared by positioning the positive electrode active material layer on the aluminum positive electrode current collector.

An all-solid-state cell was fabricated in the same manner as in Example 1 using the positive electrode, the negative electrode of Example 1, and the solid electrolyte of Example 1.

In the positive electrodes prepared by Examples 1 to 7 and Comparative Examples 1 to 3, amounts of the positive electrode active material, the binder matrix, the electrolyte, and the conductive material are shown in Table 1.

**Table 1**

| | Positive electrode active material (wt%) | Binder matrix (wt%) | Electrolyte (wt%) | Conductive material (wt%) |
|---|---|---|---|---|
| Example 1 | 85 | 1.45 | 13.15 | 0.4 |
| Example 2 | 85 | 1.4 | 13.2 | 0.4 |
| Example 3 | 85 | 1.3 | 13.3 | 0.4 |
| Example 4 | 85 | 1.1 | 13.5 | 0.4 |
| Example 5 | 85.2 | 0.8 | 13.6 | 0.4 |
| Example 6 | 85.4 | 0.6 | 13.6 | 0.4 |
| Example 7 | 85.6 | 0.4 | 13.6 | 0.4 |
| Comparative Example 1 | 85 | 1 | 13.6 | 0.4 |
| Comparative Example 2 | 85 | 1 | 13.6 | 0.4 |
| Comparative Example 3 | 85 | 1 (using PTFE binder, wet) | 13.6 | 0.4 |
| Comparative Example 4 | 85 | 1 | 13.6 | 0.4 |

### Experimental Example 1) Evaluation of discharge capacity and initial efficiency

The all-solid-state cells according to Examples 1 to 7 and Comparative Examples 1 to 4 were once charged and discharged at 0.1C and the charge capacity and the discharge capacity were measured. The measured discharge capacity result is shown in Table 2.

Furthermore, the ratio of the discharge capacity relative to the charge capacity was measured, and the results are shown in Table 2, as initial efficiency.

**Table 2**

| | Discharge capacity (mAh/g) | Initial efficiency (%) |
|---|---|---|
| Example 1 | 178 | 79.5 |
| Example 2 | 175 | 74.1 |
| Example 3 | 172 | 72.2 |
| Example 4 | 164 | 71.8 |
| Example 5 | 185 | 79.6 |
| Example 6 | 194 | 79.8 |
| Example 7 | 205 | 80.3 |
| Comparative Example 1 | 124 | 40.1 |
| Comparative Example 2 | 20.8 | 10.4 |
| Comparative Example 3 | 110 | 38.3 |
| Comparative Example 4 | 30.5 | 20.5 |

As shown in Table 2 above, the all-solid-state cells of Examples 1 to 7, which utilize the sheet-type positive electrode in which the composite active material was embedded within the binder matrix, wherein the composite active material included the core including the positive electrode active material, the conductive material attached to a surface of the positive electrode active material, and the electrolyte surrounding the surface of the core, exhibited high discharge capacity and excellent initial efficiency.

On the other hand, Comparative Example 1, which utilized a sheet-type positive electrode including a positive electrode active material and a conductive material, exhibited low discharge capacity and initial efficiency, and Comparative Example 2, which utilized the sheet-type positive electrode including the positive electrode active material and the electrolyte, exhibited significantly reduced discharge capacity and initial efficiency.

Furthermore, Comparative Example 3 in which the sheet-type positive electrode was prepared using the solvent, exhibited low discharge capacity and initial efficiency.

Additionally, Comparative Example 4, which utilize a sheet-type positive electrode in which the composite active material was embedded within the binder matrix, wherein the composite active material included the core including the positive electrode active material and the electrolyte attached to the surface of the positive electrode active material, and the conductive material surrounding the surface of the core, showed very low discharge capacity and initial efficiency.

While this invention has been described in connection with what is presently considered to be practical example embodiments, it is to be understood that the invention is not limited to the disclosed embodiments, on the contrary, it is intended to cover various modifications and equivalent arrangements included within the spirit and scope of the appended claims.

## Claims

1. A positive electrode for an all-solid-state battery, comprising:
a binder matrix; and
a composite active material embedded in the binder matrix,
the composite active material comprises a core including a positive electrode active material and a conductive material attached to the surface of the positive electrode active material; and an electrolyte layer positioned on the surface of the core.

2. The positive electrode for an all-solid-state battery as claimed in claim 1, wherein the binder matrix consists of a fibrous binder.

3. The positive electrode for an all-solid-state battery as claimed in claim 2, wherein the binder comprises polytetrafluoroethylene, polyvinyl alcohol, polyvinylidene fluoride, or a combination thereof.

4. The positive electrode for an all-solid-state battery as claimed in claim 1, wherein an amount of the binder matrix is 0.1 wt% to 10 wt% based on the total weight of the positive electrode.

5. The positive electrode for an all-solid-state battery as claimed in claim 1, wherein an amount of the conductive material is 0.1 wt% to 10 wt% based on the total weight of the positive electrode.

6. The positive electrode for an all-solid-state battery as claimed in claim 1, wherein an amount of the electrolyte is 3 wt% to 20 wt% based on the total weight of the positive electrode.

7. The positive electrode for an all-solid-state battery as claimed in claim 1, wherein an amount of the conductive material is smaller than the amount of the electrolyte.

8. The positive electrode for an all-solid-state battery as claimed in of claim 1, wherein the electrolyte comprises a solid electrolyte.

9. The positive electrode for an all-solid-state battery as claimed in claim 1, wherein the positive electrode is a sheet-type positive electrode.

10. The positive electrode for an all-solid-state battery as claimed in claim 1, wherein the positive electrode consists of the binder matrix in which the composite active material is embedded.

11. The positive electrode for an all-solid-state battery as claimed in claim 1, wherein the conductive material comprises carbon-based materials, metal-based materials, conductive polymers, or combinations thereof.

12. The positive electrode for an all-solid-state battery as claimed in claim 1, wherein the positive electrode is prepared by mixing the positive electrode active material and the conductive material to prepare a mixture;
mixing the mixture and the electrolyte to prepare an electrolyte mixture;
mixing the electrolyte mixture, the conductive material, the electrolyte, and the binder to prepare a binder mixture; and
extruding the binder mixture.

13. The positive electrode for an all-solid-state battery as claimed in of claim 1, wherein the positive electrode has a thickness of 70 µm to 500 µm.

14. An all-solid-state battery, comprising:
a positive electrode of any one of claim 1 to claim 13;
a negative electrode; and
a solid electrolyte layer positioned between the positive electrode and the negative electrode.

15. The all-solid-state battery as claimed in claim 14, wherein the solid electrolyte is a sulfide-based solid electrolyte.

16. The all-solid-state battery as claimed in claim 14, wherein the all-solid-state battery further comprises a lithium-containing layer formed between the current collector and the negative electrode coating layer during the initial charge.
